# EUROPEAN PATENT APPLICATION

(11) **EP 4 846 822 A1**
(43) Date of publication of application: **02.12.2026**
(21) Application number: 25305775.6
(22) Date of filing: 28.05.2025
(51) Int. Cl.: A01B 69/00, A01B 69/04, A01D 75/18

(54) **WORK VEHICLE**

(71) Applicant: Kubota Corporation, Osaka-shi, Osaka 530-0011 (JP)
(72) Inventor: ZERBINO, Fulvio, 60800 Crépy-en-Valois (FR)
(74) Representative: Cabinet Beau de Loménie

(57) **Abstract**

A work vehicle (1) configured to operate in combination with a work machine (2), the work vehicle (1) comprising:
- a vehicle electronic control unit (4) configured to receive a command signal (3) from the work machine (1) and to operate the work vehicle in a first mode according to said command signal (3),
- an obstacle sensor (5),
characterized in that the vehicle electronic control unit (4) is configured to operate the work vehicle (1) in a second mode if an obstacle (6) is detected by the obstacle sensor (5) in a detection area (13).

## Description

### BACKGROUND OF THE INVENTION

### 1. Field of the invention

The present disclosure relates generally to the field of work vehicles. More specifically, the present disclosure relates to a system for controlling operation of a work vehicle in combination with a work machine in a tractor implement management (TIM) system.

### 2. Description of Related Art

A work vehicle, such as a tractor, is typically operated in combination with one or more work machines, such as an agricultural implement, in order to carry out and/or perform farm work. Accordingly, the work vehicle may be retrofitted and/or customized with the work machine in order to carry out and/or perform automatically an intended form of farm work according to instructions received from the work machine. Such farm work may be, for example, soil cultivation, planting, fertilizing, irrigation, harvesting, and/or hay making.

In such a combination between a work vehicle and a work machine, it is common that work vehicles and work machines of different manufacturers are combined with each other. As such, it has been promulgated and established that connection and compatibility between work vehicles and work machines of different manufacturers is possible. As such, international standard ISO 11783 (ISOBUS), based on a control area network (CAN), has been developed as a communication protocol for the agriculture industry. Particularly, ISO 11783 defines a communication protocol for exchanging, between a work vehicle and a work machine, data concerning operation of the work vehicle and/or the work machine.

Many modern work vehicles and work machines also typically include a tractor implement management (TIM) system. The TIM system is an ISOBUS-based solution for a cross-manufacturer agricultural technology system, which may enable a work machine to control certain operation and/or functions of the work vehicle and vice versa. More specifically, the TIM system allows for interactive communication between the work vehicle and the work machine, such that a command signal from the work machine may be received by the work vehicle in order for the work machine to carry out, for example, automatic speed control of the work vehicle, automatically grass collection, etc.

However, in a work vehicle and work machine combination in which the work machine automatically controls the work vehicle, the work vehicle and work machine combination must constantly be under survey of an operator while the work vehicle performs farm work and the operator have to interact with the work vehicle or the work machine to avoid unsafe situations which could occur if the operator lacks of appropriate oversight of the work vehicle while carrying out farm work.

It is desirable to provide an improved work vehicle for automatically controlling operations of said work vehicle in combination with the work machine without involving unsafe working conditions.

### SUMMARY

The aim of the invention is to provide a work vehicle working in combination with a work machine and ensuring safe conditions during operations such as farm work or other agricultural work. Particularly, the aim of the invention is to automatically prevent unsafe condition while automatically operating the work vehicle according to work machine instructions. The aim of the invention is to avoid, or at least reduce, constant oversight of an operator while automatically operating the work vehicle according to work machine instructions.

In this respect, the present disclosure relates to a work vehicle configured to operate in combination with a work machine, the work vehicle comprising:
- a vehicle electronic control unit configured to receive a command signal from the work machine and to operate the work vehicle in a first mode according to said command signal,
- an obstacle sensor,
wherein the vehicle electronic control unit is configured to operate the work vehicle in a second mode if an obstacle is detected by the obstacle sensor in a detection area.

In other words, when an obstacle is detected in the detection area by the sensor embedded in the work vehicle, the work vehicle still receives the command signal from the work machine but operates the work vehicle and/or work vehicle's functions according to instructions defined as a function of the second mode rather than according to the command signal received from the work machine. Indeed, as the work machine is unaware of the presence of the obstacle in the vicinity of the work vehicle, i.e. in the detection area, the work machine still sends the command signal to the work vehicle but the vehicle electronic control unit prevent unsafe situations by switching from the first mode, i.e. following the command signal instructions, to the second mode to ensure safety of the work vehicle and/or the detected obstacle such as damage to the work vehicle or to the obstacle.

Thanks to these features, the work vehicle can be operated automatically without requiring an operator instruction to ensure safe operations of the work vehicle. Indeed, the work vehicle can be operated automatically according to the command signal when no obstacle is detected in the detection area and automatically switch to a second mode when an obstacle is detected in the detection area.

The work machine is preferably an implement of a tractor implement management (TIM) system, for example a front sprayer, a baler, a spreader a TIM auto steering system or any other work machine able to send the command signal to the work vehicle, for example a tractor. Preferably, the work vehicle is also part of a tractor implement management (TIM) system.

The command signal may comprise a plurality of data to command the work vehicle. In an embodiment, the command signal comprises a front work function command intended to command a work function of a front work device of the work vehicle, said front work device being arranged in a front part of the work vehicle. In an embodiment, the command signal comprises a rear work function command intended to command a work function of a rear work device of the work vehicle, said rear work device being arranged in a rear part of the work vehicle. In an embodiment, the signal command comprises a speed command, the vehicle electronic control unit being configured to drive the work vehicle according to said speed command in the first mode.

According to embodiments of the invention, the work vehicle may have the following features, alone or in combination.

The second mode may comprise a plurality of functions to ensure safety of the work vehicle's operations.

According to an embodiment, the work vehicle comprises a display.

According to an embodiment, the obstacle sensor is configured to detect a distance between the work vehicle and the obstacle, the vehicle electronic control unit being configured to display on the display the distance detected by the obstacle sensor.

According to an embodiment, the vehicle electronic control unit is configured to define a trajectory for the work vehicle avoiding the obstacle. Preferably, the vehicle electronic control unit is configured to display on the display the trajectory avoiding the obstacle. Thanks to these features, an operator oversighting the work vehicle can manually take control of the work vehicle to drive the work vehicle according to the trajectory avoiding the obstacle.

The display device can provide a plurality of information regarding the obstacle, for instance the obstacle speed and/or trajectory if the obstacle is moving, the obstacle size or any other relevant information. The trajectory avoiding the obstacle can be defined as a function of any of the above-mentioned information to avoid the obstacle.

According to an embodiment, the vehicle electronic control unit is configured to operate the work vehicle according to the speed command received from the work machine in the second mode. In other words, the second mode mainly intends to alert an operator that the obstacle has been detected in the detection area and to provide information regarding the obstacle or advises to avoid the obstacle while still applying the work vehicle operations corresponding to the command signal received from the work machine.

The obstacle sensor may be any sensor configured to detect an obstacle, such as a camera, a stereo camera, a radar, a lidar, or any other type of sensor able to detect an obstacle in the vicinity of the work vehicle. The areas, i.e. detection area and/or warning area, and/or critical area, are to be understood as 3D areas, for example spherical areas surrounding the work vehicle. For example, the obstacle sensor may include a camera pointing to the sky, e.g. to avoid that the work vehicle hits electrical wires. Moreover, the obstacle sensor may include any number of sensors depending on the work vehicle. As an example, if the work vehicle is a tractor to which is attached a long agricultural machine to be towed in a field, the obstacle sensor may include a first sensor mounted on a front and/or top side of the tractor while a second sensor is mounted on a rear side of said long agricultural machine. In such a work vehicle including a long agricultural machine, the detection area may have any shape allowing obstacle detection in the vicinity of said work vehicle.

According to an embodiment, the detection area includes a warning area, the vehicle electronic control unit being configured to operate the work vehicle in a third mode if the obstacle is detected inside the warning area. In other words, in this embodiment, the vehicle electronic control unit is configured to operate the vehicle in the first mode if the obstacle is detected outside the detection area, or if no obstacle is detected, in the second mode if the obstacle is detected inside the detection area and outside the warning area and in a third mode if the obstacle is detected inside the warning area.

The warning area is included in the detection area such that an obstacle detected inside the warning area is closer to the work vehicle than an obstacle detected inside the detection area and outside the warning area. In other words, the second mode is dedicated to inform the operator that an obstacle has been detected but is still at a safe distance from the work vehicle, as explained above, whereas the third mode is dedicated to ensure safe operating of the work vehicle by overwriting the command signal received from the work machine, as the work vehicle still receives the command signal from the work machine which is unaware that the obstacle is detected in the warning area, and automatically operate the work vehicle according to safety operation defined by said third mode.

According to an embodiment, the vehicle electronic control unit is configured to operate the vehicle in the first mode if the obstacle is detected outside the warning area and in the third mode if the obstacle is detected inside the warning area. Typically, this embodiment is dedicated to a warning area which is equal to the detection area.

This third mode can comprise a plurality of commands to ensure safe operations of the work vehicle.

According to an embodiment, the vehicle electronic control unit operates the work vehicle with a speed as a function of a safe speed command.

Such a safe speed command can be defined according to a plurality of embodiments.

According to an embodiment, the safe speed command is a preset speed.

According to an embodiment, the vehicle electronic control unit is configured to operate the work vehicle at said preset speed in the third mode, directly or progressively.

As an example, the vehicle electronic control unit may be configured to operate the work vehicle with a speed corresponding to the speed command received from the work machine when the vehicle electronic control unit starts to operate the work vehicle in the third mode and overwrite said speed instruction to progressively reduce the actual speed of the work vehicle to operate said work vehicle at the preset speed. In another example, the vehicle electronic control unit is configured to immediately apply the preset speed when the vehicle electronic control unit starts the third mode.

According to an embodiment, the safe speed command is a speed ratio. According to an embodiment, the vehicle electronic control unit is configured to operate the work vehicle as a function of the speed command received from the work machine and the speed ratio from the safe speed command in the second mode. According to an embodiment, the vehicle control unit is configured to operate the work vehicle at a speed corresponding to the speed command to which is applied the speed ratio of the safe speed command, directly or progressively, in the third mode.

According to an embodiment, the vehicle control unit is configured to emit, for instance by displaying on the display, instructions to an operator in the third mode. Such instructions can comprise, for instance, a trajectory to avoid the obstacle, an action to perform such as sending a warning to the obstacle, for instance if the obstacle is a bystander walking in the warning area, or any other action that an operator could take in reaction to the detection of the obstacle in the warning area.

According to an embodiment, the work vehicle further comprises a warning device, the vehicle electronic control unit being configured to operate the warning device for emitting a warning signal in the third mode.

Such a warning device may be any device configured to emit a warning signal such as a sound signal, a light signal or any other kind of warning signal.

According to an embodiment, the vehicle control unit operates the work vehicle with a safety FPTO (Front Power Take-Off) rpm or RPTO (Rear Power Take-Off) rpm. Similarly to the safety speed, the safety FPTO rpm or RPTO rpm may be a fixed FPTO rpm or RPTO rpm or a ratio and may be applied directly or progressively.

According to an embodiment, the warning area includes a critical area, and the vehicle electronic control unit is configured to operate the work vehicle in a fourth mode if the obstacle is detected inside the critical area. In other words, in this embodiment, the vehicle electronic control unit is configured to operate the work vehicle in a fourth mode if the obstacle is detected inside the critical area, in the third mode if the obstacle is detected outside the critical area and inside the warning area, in the second mode if the obstacle is detected outside the warning area and inside the detection area, and in the first mode if the obstacle is detected outside the detection area or if no obstacle is detected.

The critical area is included in the warning area, and therefore also in the detection area, such that an obstacle detected in the critical area is closer to the work vehicle than an obstacle detected in the warning area but outside of the critical area.

In other words, the second mode is dedicated to inform the operator that an obstacle has been detected but is still at a safe distance from the work vehicle, the third mode is dedicated to operate the work vehicle safely and anticipate a collision between the obstacle and the work vehicle despite the command signal and the fourth mode is dedicated to avoid an imminent safety risk as the obstacle is almost in contact with the work vehicle and the work vehicle still receives the command signal from the work machine which is unaware of the obstacle detection inside the critical area.

This fourth mode can comprise a plurality of commands to ensure safe working operation of the work vehicle.

According to an embodiment, the vehicle electronic control unit is configured to operate the work vehicle at a critical speed in the fourth mode. Such a critical speed may be any speed that ensures that even if the obstacle is almost in contact with the work vehicle, the work vehicle will not perform any action involving a collision between the work vehicle and the obstacle.

According to an embodiment, the critical speed is a standstill speed. Such a standstill speed is defined for each work vehicle as a speed below a threshold for which a bystander can clearly detect motions of the work vehicle. In other words, a standstill speed is a speed above zero but for which motion of the work vehicle is not detected by a bystander.

According to an embodiment, the critical speed is a minimum possible speed for the work vehicle.

According to an embodiment, the critical speed is a zero speed (0.00 km/h), the work vehicle being stopped. According to an embodiment, an assisted parking brake is engaged in the fourth mode. The assisted parking brake may be an Electronic parking brake (EPB) or an automated parking brake (APB).

According to an embodiment, the vehicle electronic control unit is configured to block a front part and/or a rear part movement of the work vehicle, such as blocking the movements of a device performing an agricultural work.

According to an embodiment, the vehicle electronic control unit is configured to switch off a FPTO or a RPTO.

Preferably, the preset speed is lower than the speed of the speed command received from the work machine. Preferably, in each mode, if the speed command received from the work machine is lower than the speed defined according to the corresponding mode, then the vehicle electronic control unit is configured to apply said speed command.

According to an embodiment, the command signal comprises work function instructions, the vehicle electronic control unit being configured to apply said work function instruction if the obstacle is detected outside the critical area, i.e. in the first, second or third mode. In a preferred embodiment, the vehicle electronic control unit is configured to not operate said work function and to ask for an operator confirmation if the obstacle is detected in the critical area, i.e. in the fourth mode.

According to an embodiment, the vehicle electronic control, or the obstacle sensor, unit is configured to detect a displacement of the obstacle from inside the critical area to outside the critical area, the vehicle electronic control unit being configured to switch from the fourth mode to the third mode when the obstacle is detected as moving out from inside the critical area to outside the critical area in the warning area. If the critical area is equal to the warning area, or to the detection area, then the vehicle electronic control unit is configured to switch from the fourth mode to the second mode, or the first mode respectively.

According to an embodiment, the vehicle electronic control unit, or the obstacle sensor, is configured to detect a displacement of the obstacle from inside the warning area to outside the warning area, the vehicle electronic control unit being configured to switch from the third mode to the second mode when the obstacle is detected as moving out from inside the warning area to outside the warning area in the detection area. If the warning area is equal to the detection area, then the vehicle electronic control unit is configured to switch from the third mode to the first mode.

According to an embodiment, the vehicle electronic control unit, or the obstacle sensor, is configured to detect a displacement of the obstacle from inside the detection area to outside the detection area, the vehicle electronic control unit being configured to switch to the first mode when the obstacle is detected as moving out from inside the detection area to outside the detection area.

According to an embodiment, the work vehicle comprises a memory, i.e. a storage device. The vehicle electronic control unit can be configured to store any relevant information. Such a memory can be configured to register obstacle data. Such obstacle data can comprise data regarding an obstacle trajectory, an obstacle speed, an obstacle size or any other parameter of the obstacle. According to an embodiment, the safety speed and/or the critical speed is registered in the memory.

The detection area is defined by a detection range. Similarly, the warning area is defined by a warning range and the critical area is defined by a critical range. The critical range is lower or equal to the warning range and the warning range is lower or equal to the detection range.

According to embodiments, the fourth mode can include at least one function of the third mode and/or at least one function of the second mode. According to embodiments, the third mode can include at least one function of the second mode.

The invention also provides a method for operating a work vehicle, the work vehicle being as above, said work vehicle being configured to operate in combination with a work machine in a tractor implement management system, the method comprising:
- Receiving the command signal from the work machine,
- detecting the obstacle in the detection area of the work vehicle,
- Operating the work vehicle in the second mode in response to the detection of the obstacle in the detection area.

According to embodiments of the invention, the method for controlling the work vehicle can have the following features, alone or in combination.

According to an embodiment, the method further comprises displaying on the display the distance between the work vehicle and the obstacle.

According to an embodiment, the method further comprises displaying on the display a trajectory to avoid the obstacle.

According to an embodiment, the method comprises detecting the obstacle in the warning area and operating the work vehicle in the third mode in response to the detection of the obstacle in the warning area.

According to an embodiment, the method comprises emitting a warning signal.

According to an embodiment, the method comprises operating the work vehicle at a safety speed in the third mode.

According to an embodiment, the method for controlling the work vehicle comprises detecting the obstacle in the critical area and operating the work vehicle in the fourth mode in response to the detection of the obstacle in the critical area.

According to an embodiment, the method comprises operating the work vehicle at a critical speed in the fourth mode.

In the manner described and according to aspects illustrated herein, the work vehicle and the method for controlling a work vehicle are contemplated to provide safety to improve the ability of a work vehicle to operate automatically in combination with a work machine and to operate said work vehicle safely, preferably without requiring an operator oversight. Indeed, the work vehicle is configured to determine modes of operation in which safety is ensured despite the signal command received from the work machine. Consequently, the work vehicle and the method provide for improved safety in the operation of said work vehicle and work machine combination.

### BRIEF DESCRIPTION OF THE DRAWINGS

Aspects of an embodiment will be described in reference to the drawings, where like numerals reflect like elements:
- Figure1 is a schematic view of a work vehicle working in combination with a work machine for controlling a work vehicle using a work machine;
- Figure 2 is a diagram showing the modes for operating the work vehicle depending on the command signal received from the work machine and the obstacle sensor when a bystander is approaching the work vehicle;
- Figure 3 is a diagram showing the modes for operating the work vehicle depending on the command signal received from the work machine and the obstacle sensor when the bystander is moving away from the work vehicle.

### DETAILED DESCRIPTION

Although the present disclosure herein has been described with reference to particular embodiments, it is to be understood that these embodiments are merely illustrative of the principles and applications of the present disclosure.

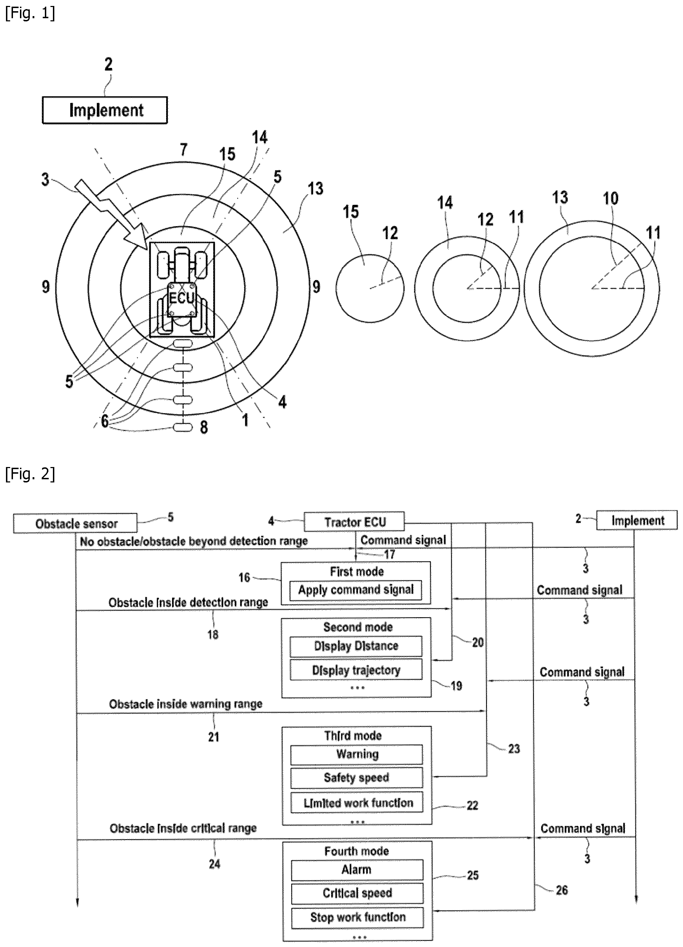

Figure 1 shows a work vehicle 1 working in combination with a work machine 2.

In the embodiment shown in Figure 1, the work vehicle 1 is an agricultural vehicle and/or work vehicle such as a tractor 1. Tractor 1 is intended to perform an agricultural work, or farm work, in an agricultural field by operating instructions received from the work machine 2, also named implement 2 as usual in the TIM language and in the following description.

In figure 1, tractor 1 is configured for use in combination with a single implement 2. However, it is contemplated that the tractor 1 may be configured for use with a plurality of implements 2.

Implement 2 is an agricultural machine and/or work machine. Particularly, in the disclosed embodiment, implement 2 is configured to perform a work function and/or the farm work. It is contemplated that the term "work function" as used herein may be understood as a farm work activity, such as baling, plowing, tilling, spraying, swathing, and the like. As such, implement 2 may be a baler, a plow, a tiller, a seeder, a sprayer, a swather, and/or the like. Implement 2 may also be another tractor or a drone or any other work device which is configured to send a command signal 3 to tractor 1. As an example, implement 2 may be an autosteering system in which the work function is the tractor's wheels steering control. Such an implement 2 may generate and send speed commands and/or curvature commands to the tractor 1.

Tractor 1 and implement 2 are configured to communicate, for example, using the international standard ISO 11783, which is called ISOBUS and based on a control area network (CAN).

Tractor 1 and implement 2 may each be a part of a tractor implement management (TIM) system. It is contemplated that a TIM system as referred to herein may be understood to be an ISOBUS-based agricultural technology system enabling compatibility and interactive communication between the tractor 1 and the implement 2, which may each be products that are different in manufacturer. In the disclosed embodiment, certain operations of tractor 1 may be determined by implement 2. Tractor 1 may be understood as an owner of TIM functions, and thereby referred to herein as a "TIM server." Implement 2 may be understood as a generator of TIM commands, i.e. the command signal, and thereby referred to herein as a "TIM client.". Thus, implement 2 sends the command signal 3 to tractor 1 in order to operate said functions of tractor 1 according to signal command 3.

Tractor 1 comprises an electronic control unit (ECU) 4, hereafter named tractor ECU 4, configured to communicate with implement 2. Especially, the tractor ECU 4 is configured to receive the command signal 3 from implement 2 and operate tractor 1, i.e. TIM functions, according to instructions corresponding to said command signal 3. Implement 2 may include one or more implement electronic control unit (ECU) configured to generate and /or send the command signal 3 to the tractor ECU 4. It is contemplated that the implement ECU transmits the command signal 3 to the tractor ECU 4 via a wired connection, a wireless connection, or any other manner of transmitting information and the command signal 3.

tractor 1 includes one or more obstacle sensor 5 configured to communicate with the tractor ECU 4. In the embodiment shown on figure 1, tractor 1 comprises a plurality of obstacle sensors 5 configured to detect an obstacle 6 around the work vehicle 1, inside a front zone 7, inside a rear zone 8 and/or inside side zones 9. These obstacle sensors 5 may be any sensor having the ability to detect the obstacle 6 in the vicinity of tractor 1.

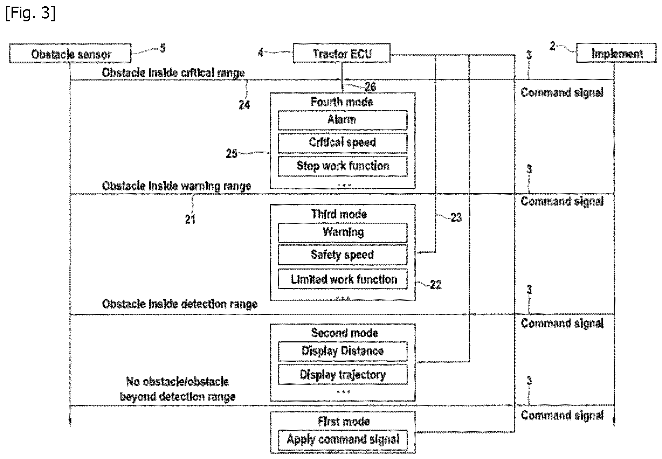

The tractor ECU 4, or the obstacle sensors 5, is configured to define a detection range 10, a warning range 11 and a critical range 12. These ranges 10, 11, and 12 define distances from tractor 1 corresponding to the limits of areas for which the vehicle ECU 4 is operating tractor 1 according to specific modes as described below in view of figures 2 and 3. A detection area 13 is defined between the detection range 10 and the warning range 11. A warning area 14 is defined between the critical range 12 and the warning range 11. A critical area 15 is defined for distances between tractor 1 and the critical range 12.

Figure 2 shows a diagram in which the specific modes for operating tractor 1 are shown. In this embodiment, obstacle 6 is, given as an example, a bystander walking toward tractor 1 from beyond the detection range 10 to below the critical range 12 (see figure 1). The obstacle 6 given as a bystander below is an example however obstacle sensor 5 can detect any kind of obstacle such as another vehicle or any other element, moving or not. Moreover, the description below generally refers to the obstacle sensor 5, but it should be understood that this obstacle sensor 5 may be a single obstacle sensor or a plurality of obstacle sensors, the obstacle 6 being detected by at least one of said plurality of obstacle sensor.

In use, tractor 1 receives the command signal 3 from implement 2. When no bystander is detected by the obstacle sensor 5, or by any of the plurality of obstacle sensors 5, the tractor ECU 4 then operates (see reference 17) tractor 1 according to a first mode 16.

In this first mode 16, the tractor ECU 4 operates the tractor 1 according to instructions corresponding to the command signal 3. Especially, when the command signal includes a speed command, for example a 5km/h speed command, the tractor ECU 4 operates the tractor 1 with a speed corresponding to said speed command. The tractor ECU 4 also operates other tractor's functions according to the command signal 3.

According to the invention, the tractor ECU 4 also operates the tractor 1 in said first mode 16 if the obstacle sensor 5 detects bystander 6 beyond the detection range 10. Indeed, if bystander 6 is located beyond the detection range 10, then there is no specific danger for either tractor 1 or bystander 6.

When bystander 6 is moving toward tractor 1 and enters inside the detection area 13, then the obstacle sensor 5 detects the bystander 6 inside the detection area 13. The obstacle sensor 5 sends a signal (see reference 18) to the tractor ECU 4 corresponding to the detection of the bystander 6 inside the detection area 13. When receiving this signal, the tractor ECU 4 is configured to switch from the first mode 16 to a second mode 19 and operates (see reference 20) tractor 1 according to said second mode 19.

In the detection area 13, bystander 6 is still far away from tractor 1 such that safety of both tractor 1 and bystander 6 is still ensured. Thus, the main goal of the second mode 19 is to alert an operator (not shown) that a bystander 6 is coming toward tractor 1 but, as no imminent risk is involved as the bystander 6 is still far away from tractor 1, to continue to operate tractor 1 according to the command signal 3 received from implement 2.

Thus, in the second mode, the tractor ECU 4 applies the instructions received from implement 2 with the command signal 3 but also activates additional functions to alert the operator.

In the embodiment shown on figure 2, the tractor ECU 4 mainly displays on a display embedded in the tractor 4 information related to the obstacle 6, i.e. the bystander 6.

For example, the tractor ECU 4 displays on the display the distance between tractor 1 and bystander 6, a trajectory of bystander 6, a moving speed of bystander 6 or any other relevant information regarding bystander 6 and detected by the obstacle sensor 5.

In other words, tractor 1 is still operated according to the command signal 3 but the operator is now aware that the bystander 6 is detected in the detection area 13 and therefore the operator could decide to take any action accordingly. However, as long as no action is taken by the operator, the tractor ECU 4 continues to operate the tractor automatically as a function of the command signal 3 received from implement 2.

If bystander 6 still moves toward tractor 1 and enters inside the warning area 14, then the obstacle sensor 5 sends a signal (see reference 21) to the tractor ECU 4 corresponding to the detection of the bystander 6 inside the warning area 14. When receiving this signal, the tractor ECU 4 switches from the second mode 19 to a third mode 22 and operates (see reference 23) tractor 1 according to said third mode 22. In this third mode 22, bystander 6 is closer to tractor 1 such that tractor 1 must take actions in order to automatically avoid any dangerous situation.

As implement 2 is unaware of the bystander 6 detection, the tractor ECU 4 still receives the command signal 3, including the speed command. If the tractor ECU 4 operates tractor 1 according to said command signal 3, a dangerous situation could occur as bystander 6 is coming toward said tractor 1. Thus, the tractor ECU 4 which receives instructions from implement 2 with the command signal 3 bypass said instructions to ensure safety of both tractor 1 and bystander 6.

In the embodiment shown in figure 2, and given as an example, the tractor ECU 4 overwrites the speed command received with the command signal 3 to operate tractor 1 with a safety speed. This safety speed is preferably lower than the speed command and may be a fixed target speed or a ratio for example. As an example, the safety speed may be a fixed speed of 1km/h. Alternatively, the safety speed may be a ratio of 10%, the safety speed then being 10% of the command speed.

Moreover, the tractor ECU 4 may operate tractor 1 with safety speed directly, i.e. immediately, or progressively, i.e. progressively slowing down the tractor speed from the speed command to the safety speed.

Moreover, in the third mode 22, the tractor ECU 4 may emit a warning through a warning device embedded in the tractor 1. Such warning may be any kind of signal such as a sound signal, a light signal or any other kind of signal intended to alert the operator and/or bystander 6 of the danger.

The third mode 22 may also include information to the operator to avoid danger. For example, the tractor ECU 4 may display a trajectory to avoid bystander 6 such that the operator could manually drive tractor 1 to avoid bystander 6 according to said avoiding trajectory Moreover, the tractor ECU 4 may continue to use, i.e. display, the second mode 19 functions informing the operator such that the distance between tractor 1 and bystander 6, trajectory of the bystander 6, etc.

If command signal 3 comprises instructions to perform functions of the tractor 1, the third mode 22 may also overwrite these instructions to ensure safety of both tractor 1 and bystander 6. This overwriting could include not applying the instructions received in the command signal 3 and/or using alternative working functions such as a limited movement of the part of the tractor 1 dedicated to performing said work function.

If bystander 6 still moves toward tractor 1 and enters inside critical area 15, then the obstacle sensor 5 sends a signal (see reference 24) to the tractor ECU 4 corresponding to the detection of the bystander 6 inside the critical area 15. When receiving this signal, the tractor ECU 4 switches from the third mode 22 to a fourth mode 25 and operates (see reference 26) tractor 1 according to said fourth mode 25. In this fourth mode 25, bystander 6 is so close to tractor 1 that the tractor ECU 4 has to stop tractor 1 main functions to avoid any imminent dangerous situation.

Here again, as implement 2 is unaware of the bystander 6 detection, the tractor ECU 4 still receives the command signal 3, including the speed command. However, if the tractor ECU 4 applies the instructions according to said command signal 3 an accident such as a collision could occur. Thus, the tractor ECU 4, which receives instructions from implement 2 with the command signal 3, bypass the instructions according to command signal 3 to ensure safety of both tractor1 and bystander 6.

In the embodiment shown in figure 2, and given as an example, the tractor ECU 4 overwrites the speed command to operate tractor 1 with a critical speed. This critical speed is a speed which does not involve collision between bystander 6 and tractor 1. The critical speed is, for example, a standstill speed, the tractor 1 minimum speed or a zero speed (0.00 km/h). Preferably, once tactor 1 is stopped, an assisted parking brake is automatically engaged in fourth mode 21.

In the TIM system, it is contemplated that the obstacle signal may be continuously communicated by the obstacle sensor 5 to the tractor ECU 4. This obstacle signal may be communicated to the tractor ECU 4 even if no obstacle is detected, data corresponding to a "no obstacle detected" being used by the tractor ECU to operate tractor 1 in the first mode 16. Alternatively, the obstacle signal could be communicated to the tractor ECU 4 only when the obstacle 6 is detected, the tractor ECU 4 operating tractor 1 in the first mode 16 as long as no obstacle signal is received from the obstacle sensor 5 and switching to the second mode 19, the third mode 22 or the fourth mode 25 when a corresponding obstacle signal 18, 21, or 24 is received from the obstacle sensor 5.

It should be understood that although four modes of operation for tractor 1 are disclosed herein, the tractor ECU 4 could operate tractor 1 in more than four modes or less than four modes. For example, the tractor ECU 4 could operate tractor 1 using only the third mode 22 and fourth mode 25 above described, i.e. without using the detection range 10 and the detection area 13. In another example, an additional mode could be implemented to perform other safety functions between the third mode 22 and the fourth mode 25 as above described.

Figure 3 shows a diagram in which the bystander 6 detected inside critical area 15 is moving away of tractor 1 from critical area 15 to outside the detection area 13.

As explained above, the tractor ECU 4 is in the fourth mode 25 while bystander 6 is in the critical area 15. In said fourth mode 25, tractor 1 still receives the command signal 3 and the critical obstacle signal 24 from the obstacle sensor 5 but overwrites the instructions corresponding to said command signal 3 and operates (see reference 26) tractor 1 to ensure safety of both tractor 1 and bystander 6.

Obstacle sensor 5 sends the critical obstacle signal 24 to the tractor ECU 4 and said tractor ECU 4 continues to operate (see reference 26) tractor 1 in the fourth mode 25 as long as the obstacle signal comprises data indicating that bystander 6 is inside critical area 15.

If bystander 6 moves away from tractor 1 and walks from the critical area 15 to the warning area 14, the obstacle sensor 5 sends to the tractor ECU 4 a corresponding warning obstacle signal 21 and the tractor ECU 4 switches from operating tractor 1 in fourth mode 25 to operating (see reference 23) tractor 1 in third mode 22. As described above, in said third mode 22, the tractor ECU 4 overwrites the command signal 3 to operate tractor 1 with limited functions, in a safety mode.

If bystander 6 continues to move away from tractor 1 and walks from the warning area 14 to the detection area 13, the obstacle sensor 5 sends to the tractor ECU 4 a corresponding detection obstacle signal 18 and the tractor ECU 4 switches from operating tractor 1 in third mode 22 to operating (see reference 20) tractor 1 in second mode 19, as described above. In other words, the tractor ECU 4 operates tractor 1 according to instructions corresponding to command signal 3 but continues to give relevant information related to bystander 6 to the operator.

If bystander 6 continues to move away from tractor 1 and is not detected in the detection area 13 anymore, then the obstacle sensor 5 sends to the tractor ECU 4 a corresponding obstacle signal, or stops to send an obstacle signal, and the tractor ECU 4 switch from operating tractor 1 in second mode 19 to operating tractor 1 in first mode 16, i.e. operates tractor 1 normally according to command signal 3.

In an embodiment, any switch from one mode to another one when bystander 6 moves away from tractor 1 may depend on an operator approval, for instance by an actuator allowing the operator to give his approval for switching from one mode to another one. Such an approval requirement is particularly useful when the tractor ECU 4 switches from the fourth mode 25 to the third mode 22 as, in the fourth mode 25, bystander 6 is very close to the tractor 1 and an imminent danger is involved if the tractor ECU 4 operates tractor 1 to start again said tractor 1. Such an actuator may be a mechanical-type button, capacitive touch sensor-type button/user interface (UI) button, voice recognition-type control, or gesture recognition-type control configured to communicate with the tractor ECU 4. Additionally, or alternatively, the actuator may be a pedal configured to communicate with the tractor ECU 4. In this manner, the actuator allows for a requirement of input from the operator in order for tractor 1 to return from the fourth mode 25 to the third mode 22, and/or from the third mode 22 to the second mode 19, and/or from the second mode 19 to the first mode 16. Consequently, the actuator allows for additional safety in carrying out a work function. However, switching from one mode to another one when bystander 6 moves away from tractor 1 may be automatically performed as the obstacle sensor 5 informs the tractor ECU 4 that said bystander 6 is not in a dangerous area anymore.

Although the embodiments are described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary. As an example, there may be a plurality of implements, each implement being dedicated to a corresponding work function of the work vehicle. For instance, a first implement could be dedicated to speed commands and/or curvature commands, a second implement could be dedicated to FPTO function, and a third implement could be dedicated to RPTO function, each of said implements sending a corresponding command signal received by the work vehicle. In another example, a first implement may be dedicated to speed commands and/or curvature commands of a work vehicle, said work vehicle comprising a tractor and an attached agricultural machine, and a second implement may be the agricultural machine itself sending a command signal to the tractor to monitor RPTO rpm of said tractor.

In the present description, the control units, for instance the vehicle electronic control unit, may be specially constructed for the required purposes, or the control devices may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memory (ROM), random access memory (RAM), erasable programmable read-only memory (EPROM), electrically erasable programmable read-only memory (EEPROM), magnetic or optical cards, reduced instruction set computer (RISC), application specific integrated circuit (ASIC), or any type of media suitable for storing electronic instructions, and each coupled to a computer system bus. Furthermore, the computers referred to herein may include a single processor or architectures employing multiple processor designs for increased computing capability.

Additionally, all of the disclosed features of the work vehicle may be transposed, alone or in combination, to a method and/or an apparatus and vice versa.

## Claims

1. A work vehicle (1) configured to operate in combination with a work machine (2), the work vehicle (1) comprising:
- a vehicle electronic control unit (4) configured to receive a command signal (3) from the work machine (2) and to operate (17) the work vehicle in a first mode (16) according to said command signal (3),
- an obstacle sensor (5),
**characterized in that** the vehicle electronic control unit (4) is configured to operate the work vehicle (1) in a second mode (19) if an obstacle (6) is detected by the obstacle sensor (5) in a detection area (13).

2. The work vehicle (1) according to claim 1, wherein the work vehicle (1) comprises a display, the obstacle sensor (5) being configured to detect a distance between the work vehicle (1) and the obstacle (6), and wherein the vehicle electronic control unit (4) is configured to display on the display the distance detected by the obstacle sensor (5).

3. The work vehicle (1) according to claim 1 or 2, wherein the vehicle electronic control unit (4) is configured to detect a displacement of the obstacle (6) from inside the detection area (13) to outside the detection area (13), the vehicle electronic control unit (4) being configured to switch to the first mode (16) when the obstacle (6) is detected as moving out from inside the detection area (13) to outside the detection area (13).

4. The work vehicle (1) according to any one of claims 1 to 3, wherein the detection area (13) includes a warning area (14), and wherein the vehicle electronic control unit (4) is configured to operate (23) the work vehicle (1) in a third mode (22) if the obstacle (6) is detected inside the warning area (14).

5. The work vehicle (1) according to claim 4, wherein the vehicle electronic control unit (4) operates the work vehicle (1) with a speed as a function of a safe speed command.

6. The work vehicle (1) according to claim 4 or 5, wherein the work vehicle (1) further comprises a warning device, the vehicle electronic control unit (4) being configured to operate the warning device for emitting a warning signal in the third mode (22).

7. The work vehicle (1) according to any one of claims 4 to 6, wherein the vehicle electronic control unit (4) is configured to detect a displacement of the obstacle (6) from inside the warning area (14) to outside the warning area (14), the vehicle electronic control unit (4) being configured to switch from the third mode (22) to the second mode (19) when the obstacle (6) is detected as moving out from inside the warning area (14) to outside the warning area (14) in the detection area (13).

8. The work vehicle (1) according to any one of claims 4 to 7, wherein the warning area (14) includes a critical area (15), and wherein the vehicle electronic control unit (4) is configured to operate (26) the work vehicle (1) in a fourth mode (25) if the obstacle (6) is detected inside the critical area (15).

9. The work vehicle according to claim 8, wherein the vehicle electronic control unit (4) is configured to detect a displacement of the obstacle (6) from inside the critical area (15) to outside the critical area (15), the vehicle electronic control unit (4) being configured to switch from the fourth mode (25) to the third mode (22) when the obstacle (6) is detected as moving out from inside the critical area (15) to outside the critical area (15) in the warning area (14).

10. A method for operating a work vehicle (1), the work vehicle (1) being according to any one of claims 1 to 9, said work vehicle (1) being configured to operate in combination with a work machine (2) in a tractor implement management system, the method comprising:
- receiving the command signal (3) from the work machine (2),
- detecting the obstacle (6) in the detection area (13) of the work vehicle (1),
- operating the work vehicle (1) in the second mode (19) in response to the detection of the obstacle (6) in the detection area (13).

11. The method for operating the work vehicle (1) according to claim 10, comprising:
- detecting the obstacle (6) in the warning area (14) of the work vehicle (1),
- operating the work vehicle (1) in the third mode (22) in response to the detection of the obstacle (6) in the warning area (14).

12. The method for operating the work vehicle (1) according to claim 11, comprising:
- detecting the obstacle (6) in the critical area (15) of the work vehicle (1),
- operating the work vehicle (1) in the fourth mode (25) in response to the detection of the obstacle (6) in the critical area (15).
